(19) Europäisches Patentamt

European Patent Office

Office européen des brevets

(11) **EP 1 617 682 A2**

(12) **EUROPEAN PATENT APPLICATION**

(43) Date of publication:
**18.01.2006 Bulletin 2006/03**

(51) Int Cl.:
*H04N 9/73* (2006.01)

(21) Application number: **05106477.2**

(22) Date of filing: **14.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.07.2004 KR 2004055009**

(71) Applicant: **Samsung Electronics Co, Ltd
Suwon-si, Gyeonggi-do (KR)**

(72) Inventor: **Kim, Sung-jin,
612-1301 Sinnamusil Geukdong Apt.
Suwon-si, Gyeonggi-do (KR)**

(74) Representative: **Geary, Stuart Lloyd et al
Venner Shipley LLP
20 Little Britain
London EC1A 7DH (GB)**

(54) **White balance control circuit in an image pickup apparatus**

(57) An apparatus and method for generating control signals to regulate gain levels of colour signals based on colour data of which colour gains are not regulated and colour data of which colour gains are regulated. The apparatus and method include generating first control signals to regulate the gain levels of the plurality of colour signals based on a plurality of colour signals of which gain levels are not regulated, calculating correction values to correct the first control signals based on a plurality of colour signals of which gain levels are regulated, and generating second control signals which are results of correcting the first control signals by the correction values.

FIG. 1

EP 1 617 682 A2

**Description**

The present invention generally relates to maintaining white balance. In particular, although not exclusively, the invention relates to white balance control adapted to an image pickup apparatus such as a video camera or a digital still camera, so that a 'white' object appears white.

Conventional white balance control regulates the balance of red (R), green (G), and blue (B) colour components of of each pixel signal (that is, three primary colour components of red, green and blue), and averages out any imbalances to make the entire image achromatic, as disclosed in US-B-5,038,205.

Another conventional white balance control method, disclosed in US-A-. 2002/0101516, receives RGB data from a colour separation circuit and calculates R-gain and B-gain based on the received data in accordance with the following equations:

$$R-gain=(R-gain\_Auto\times k+R-gain\_hi\times(10-k))/10$$

$$B-gain=(B-gain\_Auto\times k+B-gain\_hi\times(10-k))/10.$$

In the above equations, k is a weight parameter, R-gain_Auto is set regardless of luminance (Y), and R-gain_hi is set based on luminance (Y) information. Accordingly, more accurate white balance control is achieved with respect to an object of low luminance by adjusting the weight parameter. This method achieves white balance control of the colour data using the control signals for the white balance control computed based on colour data which is not yet input to the colour signal amplifier. However, such a method cannot confirm whether the controlled white balance is properly obtained.

Still another white balance method, disclosed in US-B-5,267,026, receives colour difference signals R-Y and B-Y included in amplified colour data and controls the white balance according to a particular process if the received colour difference signals are not equal to zero, when it is determined that the white balance is not correct. The method achieves white balance control of the colour data using the control signals for the white balance control computed based on the colour data output from the colour signal amplifier. However, since the control signals are output based on the colour data of which white balance is controlled already, it is likely to make a wrong determination with respect to the non-white region as the white region, or vice versa. Therefore, there is a need for a white balance control that accurately determines non-white and white regions of an image.

One aspect of the present invention provides a method for generating control signals which is able to regulate gain levels of colour signals so as to obtain a white balance control of high accuracy.

Another aspect of the present invention provides an apparatus for generating control signals which is able to regulate gain levels of colour signals so as to obtain accurate white balance control.

According to a first aspect of the invention, there is provided a method of maintaining white balance, the method comprising:

receiving image data comprising a plurality of colour signals;
generating first control signals based on a plurality of non-gain level-regulated colour signals;
using the first control signals to regulate gain levels of the plurality of colour signals, thereby providing a plurality of gain level-regulated colour signals;
calculating correction values based on the plurality of gain level-regulated colour signals; and
generating second control signals by using the correction values to correct the first control signals.

Generating the second control signals may comprise subtracting the correction values from the first control signals.

The correction values may be calculated so that the plurality of gain level-regulated colour signals are placed on a blackbody radiation curve.

The correction values may be calculated using reference to a lookup table having correction values stored therein.

The method may comprise generating of the first control signals comprises:

dividing the image data into a plurality of regions, and calculating a red integrated value $IR_{IN}$, a green integrated value $IG_{IN}$ and a blue integrated value $IB_{IN}$ for plural ones of the regions;

calculating a ratio $IR_{IN}/IG_{IN}$ of the green integrated value $IG_{IN}$ and the red integrated value $IR_{IN}$ and a ratio $IB_{IN}/IG_{IN}$ of the green integrated value $IG_{IN}$ and the blue integrated value $IB_{IN}$;

selecting from the plurality of regions a region with which the associated calculated ratios are within a predetermined range;

calculating average values $IR_{AV,IN}$, $IG_{AV,IN}$ and $IB_{AV,IN}$ of the red integrated value $IR_{IN}$, the green integrated value $IG_{IN}$ and the blue integrated value $IB_{IN}$ with respect to the selected region; and

obtaining the first control signals $Rg_1$ and $Bg_1$ from the following equation and values for the selected region:

$$Rg_1 = 1/(IR_{AV,IN} / IG_{AV,IN})$$

$$Bg_1 = 1/(IB_{AV,IN} / IG_{AV,IN}).$$

According to a second aspect of the invention, there is provided apparatus for maintaining white balance, the apparatus comprising:

means for receiving image data comprising a plurality of colour signals;
means for generating first control signals based on a plurality of non-gain level-regulated colour signals;
means for using the first control signals to regulate gain levels of the plurality of colour signals, thereby providing a plurality of gain level-regulated colour signals;
means for calculating correction values based on the plurality of gain level-regulated colour signals; and
means for generating second control signals by using the correction values to correct the first control signals.

Embodiments of the invention will now be described, by way of example only, with reference to the accompanying Figures, of which:

Figure 1 is a block diagram of apparatus according to the invention, the apparatus being image pickup apparatus having control signals generation apparatus for regulating gain levels of colour signals;
Figure 2A is a diagram of a white tracking range used with some embodiments of the invention;
Figure 2B is a diagram of a white tracking range used with other embodiments of the invention;
Figure 3 is a flowchart of a method for generating control signals to regulate gain levels of colour signals, in accordance with the invention;
Figure 4 is a flowchart illustrating first control signals are generated by apparatus according to the invention;
Figure 5 is a flowchart illustrating first control signals generated by apparatus according to the invention;
Figure 6 is a flowchart illustrating first control signals generated by apparatus according to the invention; and
Figure 7 is a flowchart illustrating correction values are determined to correct the first control signals by apparatus according to the invention.

Throughout the drawings, like elements are denoted by like reference numerals.

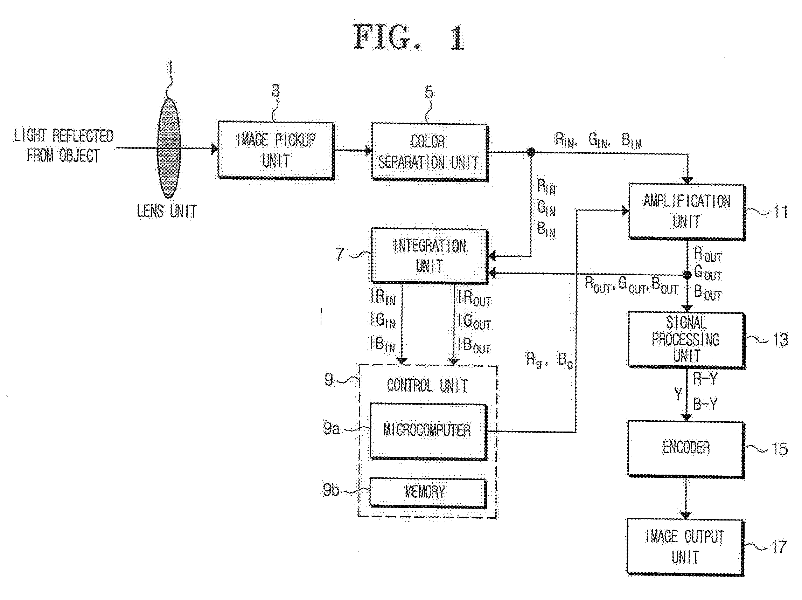

Figure 1 illustrates an image pickup apparatus having a control signal generation apparatus for regulating gain levels of colour signals, according to the present invention.
Referring to Figure 1, the image pickup apparatus comprises a lens unit 1, an image pickup unit 3, a colour separation unit 5, an integration unit 7, a control unit 9, an amplification unit 11, a signal processing unit 13, an encoder 15, and an image output unit 17.
Although not shown in the Figure, the lens unit 1 comprises an optical lens, an aperture, and a mechanical shutter. These components are driven according to respective control signals supplied externally to adjust a focal length and an amount of exposure.
The image pickup unit 3 comprises a colour charge-coupled device (CCD) and a correlated double sampling (CDS) circuit. The image pickup unit 3 receives light through the lens unit 1 and converts the received light into an analogue signal.
Although not shown in Figure 1, an analogue-to-digital (A/D) converter is disposed between the image pickup unit 3 and the colour separation unit 5. The A/D converter converts the analogue signal from the image pickup unit 3 into a digital signal.
The colour separation unit 5 comprises an arrangement of colour filters. It separates the digital signal received from the A/D converter by colour. In this embodiment, the colour separation unit 5 separates the digital signal into three signals, namely red (R), green (G) and blue (B).

The amplification unit 11 increases or decreases the magnitude of colour signals input from the colour separation unit 5 according to control signals input from the control unit 9. The amplification unit 11 comprises a R amplifier having a gain Rg to amplify a R signal and a B signal, respectively, and a B amplifier having a gain Bg. The amplification unit 11 decreases or increases the magnitude of the R signal and the B signal in accordance with Rg and Bg values. Colour signals input to the amplification unit 11 are presented as $R_{IN}$, $G_{IN}$ and $B_{IN}$, respectively, and colour signals output from the amplification unit are presented as $R_{OUT}$, $G_{OUT}$ and $B_{OUT}$, respectively.

If the signal processing unit 13 is a single-plate type, the signal processing unit 13 performs colour interpolation. According to an embodiment of the present invention, the signal processing unit 13 receives $R_{OUT}$, $G_{OUT}$ and $B_{OUT}$ and outputs a luminance value Y and colour difference signals R-Y and B-Y. It is well-known how to calculate the luminance value Y and the colour difference signals R-Y and BY from the R, G and B colour signals. For instance, they may be obtained in accordance with the following equations:

$$Y = 0.3 \times R + 0.6 \times G + 0.1 \times B$$

$$R - Y = 0.7 \times R - 0.6 \times G - 0.1 \times B$$

$$B - Y = -0.3 \times R - 0.6 \times G + 0.9 \times B.$$

The image output unit 17 is an image display device or a memory for recording image data. Light reflected from an object is subjected to the above-mentioned operations and is finally output to the image output unit 17 as image data, for instance in a visible format such as a photograph.

The integration unit 7 receives the colour signals $R_{IN}$, $G_{IN}$ and $B_{IN}$ from the colour separation unit 5 and calculates integrated values $IR_{IN}$, $IG_{IN}$ and $IB_{IN}$, respectively for the received colour signals.

The control unit 9 controls the entire image pickup apparatus, and controls colour gains of the amplification unit 11 to maintain the white balance of the object. In capturing an image, the control unit 9 sends control signals to the lens unit 1. It also sends a timing control signal to the signal processing unit 13, for synchronizing the image data. The control unit 9 calculates colour signal gain level control signals Rg and Bg, and sends them to the amplification unit 11. The control unit 9 sends an image display control signal or an image recording control signal to the image output unit 17. In this embodiment, the control unit 9 comprises a microcomputer 9a and a memory 9b. The microcomputer 9a performs operations to generate the control signals explained above. The memory 9b stores data and control programs required for the microcomputer 9a to generate the control signals. The memory 9b may comprise a random access memory (RAM) and a read only memory (ROM), which are not shown.

In Figure 1, the colour signals $R_{IN}$, $G_{IN}$, $B_{IN}$, $R_{OUT}$, $G_{OUT}$, $B_{OUT}$, $IR_{IN}$, $IG_{IN}$, $IB_{IN}$, $IR_{OUT}$, $IG_{OUT}$, $IB_{OUT}$, Y, R-Y and B-Y, and the control signals Rg and Bg are fed over shared lines. Alternatively, these signals can be fed over separate lines.

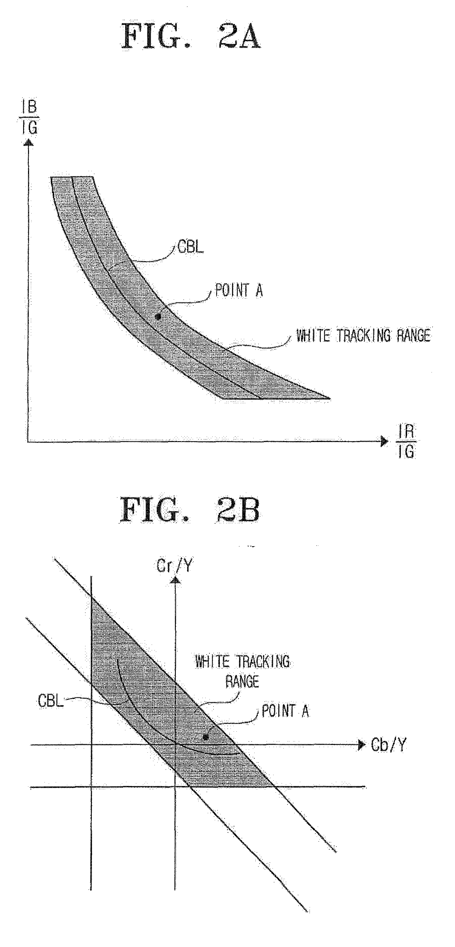

It will now be described with reference to Figures 2 to 7 how the control unit 9 generates the control signals for regulating gain levels of the colour signals..

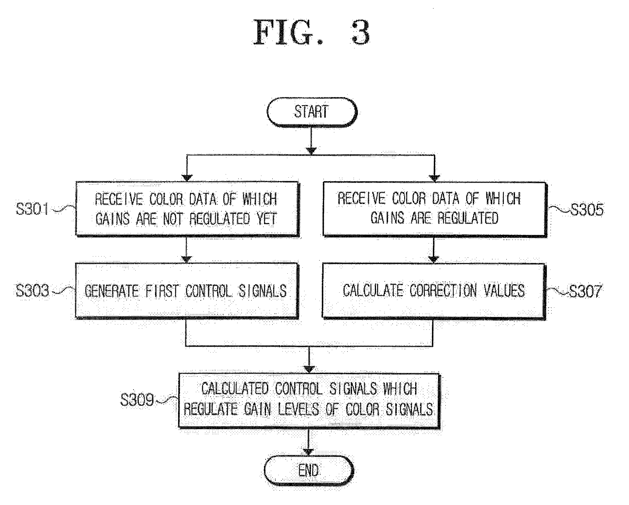

Figure 3 is a flowchart illustrating generating control signals to regulate the gain levels of the colour signals. Referring to Figure 3, the integration unit 7 receives the non-amplified colour data $R_{IN}$, $G_{IN}$ and $B_{IN}$, and calculates certain values at step S301. In this embodiment, the colour data $R_{IN}$, $G_{IN}$ and $B_{IN}$ are received, and integrated values $IR_{IN}$, $IG_{IN}$ and $IB_{IN}$, respectively for the received colour data are calculated. Alternatively, luminance $Y_{IN}$ colour data and colour difference values $R-Y_{IN}$ and $B-Y_{IN}$ is received. Integrated values may be calculated respectively for $Y_{IN}$, $R-Y_{IN}$ and $B-Y_{IN}$.

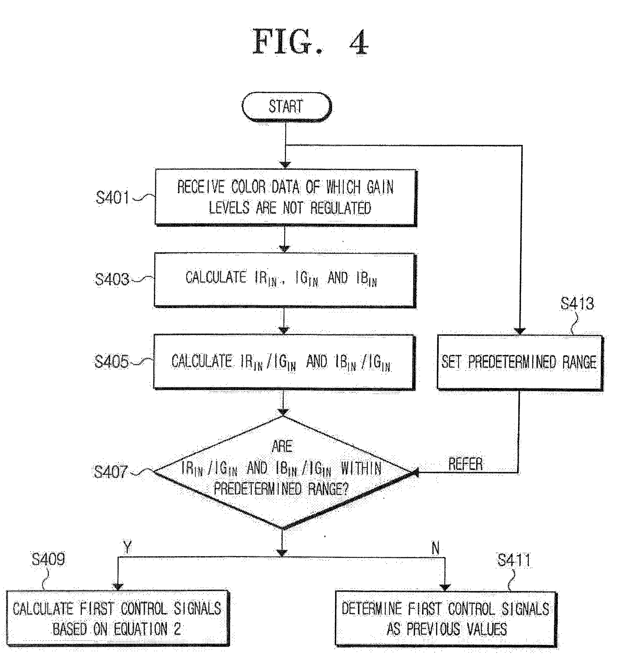

The control unit 9 generates first control signals based on the calculated values at step S303. Referring to Figures 4 to 6, the generation of the first control signals will now be explained.

The integration unit 7 receives the gain-adjusted colour data $R_{OUT}$, $G_{OUT}$ and $B_{OUT}$, and calculates certain values at step S305. Step S305 is similar to step S301. Alternatively, gain-adjusted colour data may be colour difference signals such as R-Y, B-Y and Y.

Correction values $\Delta R$ and $\Delta B$, for correcting the first control signals, are calculated based on the received colour data of step S305, at step S307. The correction values, for example, may be pre-stored in a lookup table in the memory 9b. Exemplary lookup tables are presented as the following Table 1 and Table 2.

Table 1

| R-Y | B-Y | Luminance (Y) | $\Delta R$ | $\Delta B$ |
|---|---|---|---|---|
| R-$Y_{OUT,1}$ | B-$Y_{OUT,}$ | $_1Y_{OUT,1}$ | $\Delta R_1$ | $\Delta B_1$ |
| R-$Y_{OUT,2}$ | B-$Y_{OUT,2}$ | $Y_{OUT,2}$ | $\Delta R_2$ | $\Delta B_2$ |
| R-$Y_{OUT,3}$ | B-$Y_{OUT,3}$ | $Y_{OUT,3}$ | $\Delta R_3$ | $\Delta B_3$ |
| R-$Y_{OUT,4}$ | B-$Y_{OUT,4}$ | $Y_{OUT,4}$ | $\Delta R_4$ | $\Delta B_4$ |

In Table 1, correction values $\Delta R_1$, $\Delta R_2$, $\Delta R_3$, $\Delta R_4$, $\Delta B_1$ $\Delta B_2$, $\Delta B_3$ and $\Delta B_4$ can be obtained, without undue experimentation, according to the colour difference signals R-Y and B-Y and the luminance signal Y.

For instance, if the received data at step S305 is R-$Y_{OUT, 2}$, B-$Y_{OUT, 2}$ and $Y_{OUT, 2}$, correction values of $\Delta R_2$ and $\Delta B_2$, respectively, are determined.

Table 2

| R | G | B | $\Delta R$ | $\Delta B$ |
|---|---|---|---|---|
| $R_{OUT, 1}$ | $G_{OUT, 1}$ | $B_{OUT, 1}$ | $\Delta R_1$ | $\Delta B_1$ |
| $R_{OUT, 2}$ | $G_{OUT, 2}$ | $B_{OUT, 2}$ | $\Delta R_2$ | $\Delta B_2$ |
| $R_{OUT, 3}$ | $G_{OUT, 3}$ | $B_{OUT, 3}$ | $\Delta R_3$ | $\Delta B_3$ |
| $R_{OUT, 4}$ | $G_{OUT, 4}$ | $B_{OUT, 4}$ | $\Delta R_4$ | $\Delta B_4$ |

In Table 2, correction values $\Delta R_1$, $\Delta R_2$, $\Delta R_3$, $\Delta R_4$, $\Delta B_1$, $\Delta B_2$, $\Delta B_3$ and $\Delta B_4$ can be obtained, without undue experimentation, according to R, G and B values.

Referring now to Figures 2A and 2B, the calculation of the correction values assigned to the lookup table is explained.

One assumption is that the received data at step S305 is located at a point A of Figure 2A. Correction values $\Delta R$ and $\Delta B$ for the point A are amounts determined so as to move the point A onto a blackbody radiation curve CBL. Specifically, the correction values $\Delta R$ and $\Delta B$ become a function with respect to a distance from the point A to the curve CBL of Figure 2A, and may be determined experimentally. The correction values $\Delta R$ and $\Delta B$ may be positive or negative. For example, if the received data at step S305 is located above the blackbody radiation curve CBL of Figure 2A, correction values are positive. In contrary, if the received data is located below the curve CBL, correction values $\Delta R$ and $\Delta B$ are negative.

Another assumption is that the received data at step S305 is located at point A of Figure 2B. Here, correction values $\Delta R$ and $\Delta B$ are amounts determined so as to move the point A onto the blackbody radiation curve CBL. The correction values $\Delta R$ and $\Delta B$ may be positive or negative. Whether the correction values $\Delta R$ and $\Delta B$ are positive or negative depends on the definition of Equation 1, explained below. In case of Equation 1, when the received data at step S305 is located above the curve CBL of Figure 2B, the correction values $\Delta R$ and $\Delta B$ are positive. When the received data is located below the curve CBL, the correction values $\Delta R$ and $\Delta B$ are negative.

Second control signals for regulating gain levels of the colour data are calculated at step S309 based on the correction values and the first control signals. The second control signals can be obtained by subtracting the correction values $\Delta R$ and $\Delta B$ from the first control signals in accordance with Equation 1:

$$\text{Equation 1}$$

$$Rg = Rg_1 - \Delta R$$

$$Bg = Bg_1 - \Delta B$$

Alternatively, the second control signals can be obtained by adding the first control signals and the correction values. In this case, the positive and negative of the correction values are defined as described below. That is, when the data received at step S305 is located above the blackbody radiation curve CBL of Figure 2, the correction values are negative. When the received data is below the curve CBL, the correction values are positive.

If the correction values are equal to zero, the first control signals is used as it is, i.e. without correction, to regulate gain levels of the colour data.

The way in which the second control signals are obtained, by subtracting the correction values from the first control signal, are merely illustrative and should not be understood to be limiting to the present invention. For example, the second control signals may instead be generated by multiplying the first control signals by the correction values, in which the correction values are values multiplied by a proper scaling factor.

Figure 4 is a flowchart showing a method for generating first control signals. Referring to Figure 4, the colour data is received at step S401. The colour data comprises $R_{IN}$, $G_{IN}$ and $B_{IN}$.

Integrated values $IR_{IN}$, $IG_{IN}$ and $IB_{IN}$ are calculated for $R_{IN}$, $G_{IN}$ and $B_{IN}$ at step S403. In this embodiment, the integrated values are calculated for each of the colour components with respect to the entire data received.

A ratio $IR_{IN}/IG_{IN}$ and a ratio $IB_{IN}/IG_{IN}$ are calculated at step S405.

Steps S401 to S405 are performed at step S301 described above.

At step S407, it is determined whether the ratios $IR_{IN}/IG_{IN}$ and $IB_{IN}/IG_{IN}$ fall within a predetermined range which is defined at step S413. If so, the first control signals are calculated in accordance with following Equation 2 at step S409:

$$\textbf{Equation 2}$$

$$Rg_1 = 1/(IR_{IN}/IG_{IN})$$

$$Bg_1 = 1/(IB_{IN}/IG_{IN}).$$

In Equation 2, $Rg_1$ is the first control signal with respect to R, and $Bg_1$ is the first control signal for B.

When it is determined that the ratios $IR_{IN}/IG_{IN}$ and $IB_{IN}/IG_{IN}$ fall outside the predetermined range, the first control signals for R and B are maintained at the previous values, without changing at step S411.

The predetermined range is set prior to step S407 at step S413. The setting of the predetermined range is described with reference to Figures 2A and 2B. The hatched area of Figures 2A and 2B indicates the predetermined range, within which the white is tracked. CBL indicates the blackbody radiation curve. The blackbody radiation curve is constructed by calculating IR/IG and IB/IG from colour values obtained by capturing a white object under a light source having various colour temperatures, and placing the obtained values along a first axis of IR/IG and a second axis of IB/IG on a two-dimensional plane.

The white tracking range can be provided to cover a region within a certain distance of the blackbody radiation curve, as shown in Figure 2A. Here, the boundary of the predetermined range is a fixed distance from the closest point on the blackbody radiation curve.

Figure 2B illustrates a white tracking range when the colour data comprises the luminance Y and the colour difference signals R-Y and B-Y. Cr is data digitised from R-Y, and Cb is data digitised from B-Y.

The predetermined range, that is, the white tracking range, can be pre-stored in the memory 9b.

At step S407, it is determined whether $IR_{IN}/IG_{IN}$ and $IB_{IN}/IG_{IN}$ calculated at step S405 are within the white tracking region of Figure 2A.

Referring back to Figure 4, the first control signals can be obtained from the colour components $R_{IN}$, $G_{IN}$ and $B_{IN}$, and also may be calculated based on R-$Y_{IN}/Y_{IN}$ and B-$Y_{IN}/Y_{IN}$. In this situation, the white tracking range as shown in Figure 2B can be used.

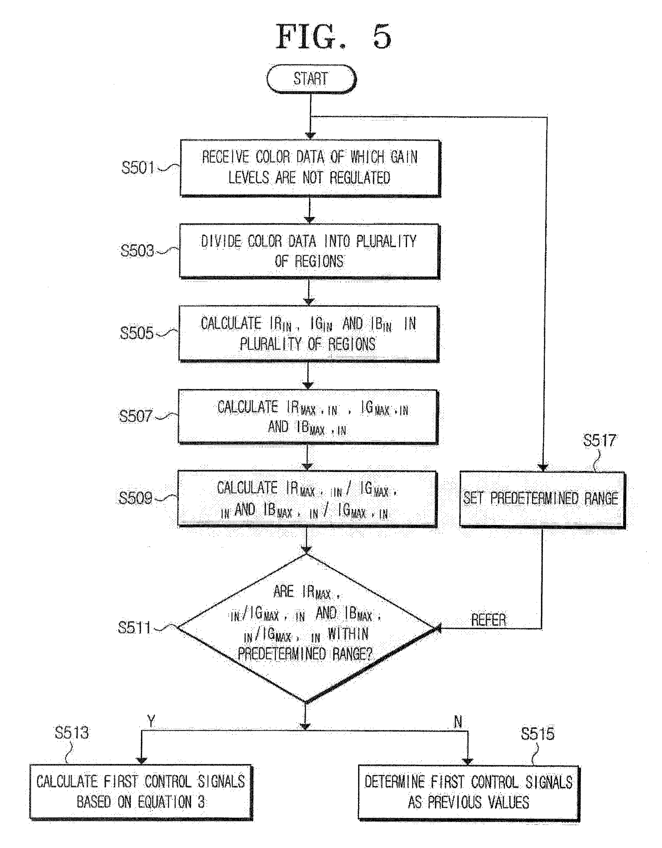

Figure 5 is a flowchart of a method for determining the first control signals.. At step S501, the colour data, of which gain levels are not regulated, is received. The colour data is divided into a plurality of regions (for example, a1, a2, ...., aN) at step S503.

Integrated values $IR_{IN}$, $IG_{IN}$ and $IB_{IN}$ of the colour data are calculated within the plurality of regions at step S505. As the integrated value $IR_{IN}$ is obtained from the plurality of the regions, the total number of integrated values is N. The number of integrated values $IG_{IN}$ and $IB_{IN}$ also is N.

A maximum value is obtained from the integrated values for the respective colours at step S507. More specifically, $IR_{MAX, IN}$ having the largest value among the N-ary $IR_{IN}$ values is determined, and $IG_{MAX, IN}$ and $IB_{MAX, IN}$ are similarly determined for each of $IG_{IN}$ and $IB_{IN}$.

$IR_{MAX, IN}/IG_{MAX, IN}$ and $IB_{MAX, IN}/IG_{MAX, IN}$ are calculated at step S509.

Steps S503 through S509 can be performed at step S301.

A predetermined range is defined at step S517. At step S511, following step S517, it is determined whether $IR_{MAX, IN}/IG_{MAX, IN}$ and $IB_{MAX, IN}/IG_{MAX, IN}$ lie within the predetermined range defined at step S517. Namely, it is determined whether $IR_{MAX, IN}/IG_{MAX, IN}$ and $IB_{MAX, IN}/IG_{MAX, IN}$ lie within the hatched area of Figure 2A. If so, the first control signals are calculated in accordance with the following Equation 3 at step S513:

$$\text{Equation 3}$$

$$Rg_1 = 1/(IR_{MAX,IN} / IG_{MAX,IN})$$

$$Bg_1 = 1/(IB_{MAX,IN} / IG_{MAX,IN}).$$

If it is determined that $IR_{MAX, IN}/IG_{MAX, IN}$ and $IB_{MAX, IN}/IG_{MAX}$, IN lie outside the predetermined range, the first control signals are determined to be the previous value at step S515.

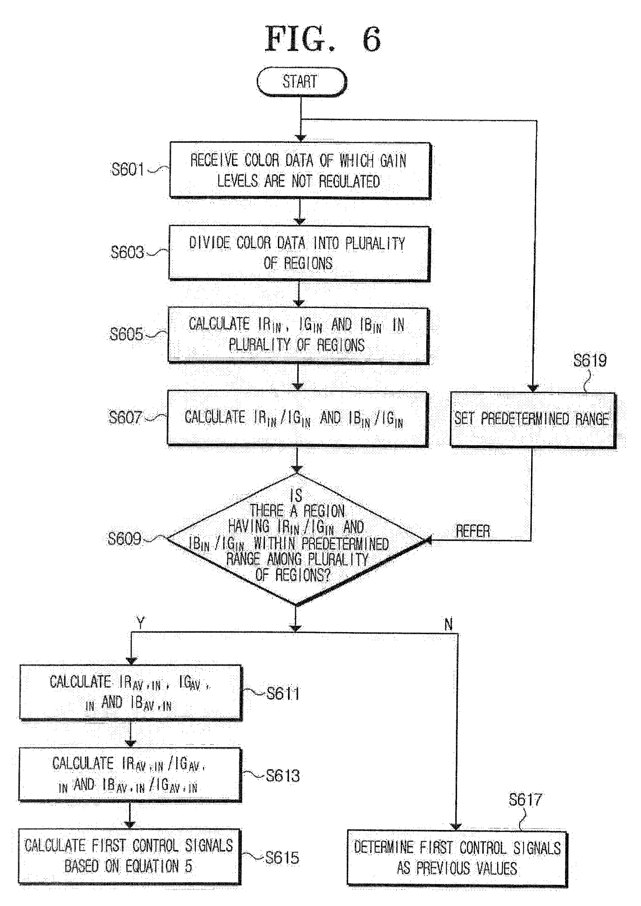

Figure 6 is a different flowchart illustrating the generation of the first control signals.

Steps S601 through S605 are performed in the same manner as steps S501 through S505 of Figure 5. Therefore, a discussion of steps S601 through S605 is not provided here.

$IR_{IN}/IG_{IN}$ and $IB_{IN}/IG_{IN}$ are calculated with respect to a plurality of regions at step S607. If the total number of the regions is N, $IR_{IN}/IG_{IN}$ and $IB_{IN}/IG_{IN}$ are calculated for each of the N regions.

At step S609, a value within a predetermined range is selected from the calculated $IR_{IN}/IG_{IN}$ and $IB_{IN}/IG_{IN}$ values. Specifically, a region having $IR_{IN}/IG_{IN}$ and $IB_{IN}/IG_{IN}$ values within the predetermined range defined at step S619 is selected.

In this embodiment, the region having $IR_{IN}/IG_{IN}$ and $IB_{IN}/IG_{IN}$ values within the white tracking range of Figure 2A is selected.

When there is at least one region having $IR_{IN}/IG_{IN}$ and $IB_{IN}/IG_{IN}$ values within the predetermined range, average values $IR_{AV,IN}$, $IG_{AV,IN}$ and $IB_{AV,IN}$ of $IR_{IN}$, $IG_{IN}$ and $IB_{IN}$ with respect to the selected region are calculated at step S611. For example, the plurality of the regions are a1, a2, ..., aN and three regions a2, a4 and a7 having $IR_{IN}/IG_{IN}$ and $IB_{IN}/IG_{IN}$ values within the predetermined range of step S619 are selected. The average values are calculated in accordance with equation 4 at step S611:

$$\text{Equation 4}$$

$$IR_{AV,IN} = (IR_{a2,IN} + IR_{a4,IN} + IR_{a7,IN})/3$$

$$IG_{AV,IN} = (IG_{a2,IN} + IG_{a4,IN} + IG_{a7,IN})/3$$

$$IB_{AV,IN} = (IB_{a2,IN} + IB_{a4,IN} + IB_{a7,IN})/3$$

In Equation 4, $IR_{a2,IN}$, $IG_{a2,IN}$ and $IB_{a2,IN}$ are colour components in the region a2, $IR_{a4,IN}$, $IG_{a4,IN}$ and $IB_{a4,IN}$ are colour components in the region a4, and $IR_{a7,IN}$, $IG_{a7,IN}$ and $IB_{a7,IN}$ are colour components in the region a7.

$IR_{AV,IN}/IG_{AV,IN}$ and $IB_{AV,IN}/IG_{AV,IN}$ are calculated at step S613.

The first signals $Rg_1$ and $Bg_1$ are calculated in accordance with Equation 5 at step S615:

$$\text{Equation 5}$$

$$Rg_1 = 1/(IR_{AV,IN} / IG_{AV,IN})$$

$$Bg_1 = 1/(IB_{AV,IN} / IG_{AV,IN}).$$

When there is no region having $IR_{IN}/IG_{IN}$ and $IB_{IN}/IG_{IN}$ within the predetermined range, the first control signals are determined to be the previous value at step S617.

The above method for generating the first control signals is merely an example. US-B-.. 5,038,205, US-A-. 2003/0218677, US-B-. 6,522,353 and US-A-. 2002/0201516 disclose methods for generating the control signals based on the received colour data of which gains are not adjusted.

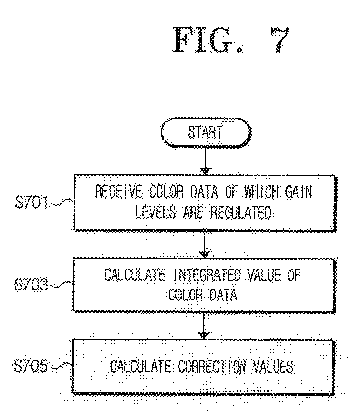

Figure 7 is a flowchart illustrating how correction values, used to correct the first control signals, can be determined.

Referring to Figure 7, gain level-regulated colour data is received at step S701. Integrated values of the received colour data are calculated at step S703. The integrated values may be calculated with respect to a plurality of regions and for R, B and G. Alternatively, integrated values of R-Y, B-Y and Y can be calculated.

Correction values are obtained from a lookup table at step S705. Exemplary lookup tables are Table 1 and Table 2 above. If the integrated value is for R, B and G, the correction values can be obtained based on Table 2. If the integrated value is for the colour difference signal, the correction values can be obtained based on Table 1.

The method and the apparatus for generating the control signals to regulate gain levels of colour signals according to an embodiment of the present invention enables to achieve the white balance control with high accuracy.

Whilst exemplary embodiments of the present invention have been described, additional variations and modifications of the embodiments may occur to those skilled in the art. The invention is not limited by the described embodiments but only by the appended claims.

**Claims**

1.   A method of maintaining white balance, the method comprising:

   receiving image data comprising a plurality of colour signals;
   generating first control signals based on a plurality of non-gain level-regulated colour signals;
   using the first control signals to regulate gain levels of the plurality of colour signals, thereby providing a plurality of gain level-regulated colour signals;
   calculating correction values based on the plurality of gain level-regulated colour signals; and
   generating second control signals by using the correction values to correct the first control signals.

2.   The method of claim 1, wherein generating the second control signals comprises subtracting the correction values from the first control signals

3.   The method of claim 1 or claim 2, wherein the correction values are calculated so that the plurality of gain level-regulated colour signals are placed on a blackbody radiation curve.

4.   The method of any preceding claim, wherein the correction values are calculated using reference to a lookup table having correction values stored therein.

5.   The method of any preceding claim, wherein generating of the first control signals comprises:

   dividing the image data into a plurality of regions, and calculating a red integrated value $IR_{IN}$, a green integrated value $IG_{IN}$ and a blue integrated value $IB_{IN}$ for plural ones of the regions;
   calculating a ratio $IR_{IN}/IG_{IN}$ of the green integrated value $IG_{IN}$ and the red integrated value $IR_{IN}$ and a ratio $IB_{IN}/IG_{IN}$ of the green integrated value $IG_{IN}$ and the blue integrated value $IB_{IN}$;
   selecting from the plurality of regions a region with which the associated calculated ratios are within a predetermined range;
   calculating average values $IR_{AV,IN}$, $IG_{AV,IN}$ and $IB_{AV,IN}$ of the red integrated value $IR_{IN}$, the green integrated value $IG_{IN}$ and the blue integrated value $IB_{IN}$ with respect to the selected region; and
   obtaining the first control signals $Rg_1$ and $Bg_1$ from the following equation and values for the selected region:

$$Rg_1 = 1/(IR_{AV,IN} / IG_{AV,IN})$$

$$Bg_1 = 1/(IB_{AV,IN} / IG_{AV,IN}).$$

6.   Apparatus for maintaining white balance, the apparatus comprising:

   means (3,5) for receiving image data comprising a plurality of colour signals;
   means (9) for generating first control signals based on a plurality of non-gain level-regulated colour signals;
   means (11) for using the first control signals to regulate gain levels of the plurality of colour signals, thereby providing a plurality of gain level-regulated colour signals;
means (9) for calculating correction values based on the plurality of gain level-regulated colour signals; and
means (9) for generating second control signals by using the correction values to correct the first control signals.

7. Apparatus according to claim 6, wherein the means (9) for generating the second control signals comprises means for subtracting the correction values from the first control signals.

8. Apparatus according to claim 6 or claim 7, wherein the means (9) for generating the second control signals is arranged to place the plurality of gain level-regulated colour signals on a blackbody radiation curve.

9. Apparatus according to any of claims 6 to 8, arranged to use reference to a lookup table having correction values stored therein to calculate the correction values.

10. Apparatus according to any preceding claim, wherein the means (9) for generating the first control signals are arranged:

to divide the image data into a plurality of regions, and to calculate a red integrated value $IR_{IN}$, a green integrated value $IG_{IN}$ and a blue integrated value $IB_{IN}$ for plural ones of the regions;
to calculate a ratio $IR_{IN}/IG_{IN}$ of the green integrated value $IG_{IN}$ and the red integrated value $IR_{IN}$ and a ratio $IB_{IN}/IG_{IN}$ of the green integrated value $IG_{IN}$ and the blue integrated value $IB_{IN}$;
to select from the plurality of regions a region with which the associated calculated ratios are within a predetermined range;
to calculate average values $IR_{AV,IN}$, $IG_{AV,IN}$ and $IB_{AV,IN}$ of the red integrated value $IR_{IN}$, the green integrated value $IG_{IN}$ and the blue integrated value $IB_{IN}$ with respect to the selected region; and
to obtain the first control signals $Rg_1$ and $Bg_1$ from the following equation and values for the selected region:

$$Rg_1 = 1/(IR_{AV,IN} / IG_{AV,IN})$$

$$Bg_1 = 1/(IB_{AV,IN} / IG_{AV,IN}).$$

11. A method for generating control signals which regulate gain levels of a plurality of colour signals to maintain white balance of an object by receiving image data comprising the plurality of colour signals from the object and regulating the gain levels of the plurality of colour signals, the method comprising the steps of:

generating first control signals to regulate the gain levels of the plurality of colour signals based on a plurality of colour signals of which gain levels are not regulated;
calculating correction values to correct the first control signals based on a plurality of colour signals of which gain levels are regulated; and
generating second control signals which are results of correcting the first control signals by the correction values.

12. The method of claim 11, wherein the second control signals are generated by subtracting the correction values from the first control signals

13. The method of claim 11, wherein the correction values are calculated so that the plurality of colour signals of which the gain levels are regulated, are placed on a blackbody radiation curve CBL formed by values obtained when a white object is captured under various colour temperatures on a two-dimensional plane, the two-dimensional plane having one axis of a ratio $IR_{OUT}/IG_{OUT}$ of a green integrated value $IG_{OUT}$ and a red integrated value $IR_{OUT}$ and the other axis of a ratio $IB_{OUT}/IG_{OUT}$ of the green integrated value $IG_{OUT}$ and a blue integrated value $IB_{OUT}$.

14. The method of claim 11, wherein the correction values are calculated so that the plurality of colour signals of which the gain levels are regulated, are placed on a blackbody radiation curve CBL formed by values obtained when a white object is captured under various colour temperatures on a two-dimensional plane, the two-dimensional plane having one axis of a red colour difference signal R-$Y_{OUT}$ and the other axis of a blue colour difference signal B-$Y_{OUT}$.

9

15. The method of claim 11, wherein the correction values are calculated in reference to a lookup table having correction values determined experimentally according to the plurality of colour signals of which the gain levels are regulated.

16. The method of claim 15, wherein the correction values of the lookup table are determined experimentally according to values of red, green and blue.

17. The method of claim 15, wherein the correction values of the lookup table are determined experimentally according to values of a red colour difference signal R-Y, a blue colour difference signal B-Y and a luminance signal Y.

18. The method of claim 11, wherein the generation of the first control signals comprises sub-steps of:

dividing the image data into a plurality of regions and calculating a red integrated value $IR_{IN}$, a green integrated value $IG_{IN}$ and a blue integrated value $IB_{IN}$ by the plurality of regions;
calculating a ratio $IR_{IN}/IG_{IN}$ of the green integrated value $IG_{IN}$ and the red integrated value $IR_{IN}$ and a ratio $IB_{IN}/IG_{IN}$ of the green integrated value $IG_{IN}$ and the blue integrated value $IB_{IN}$;
selecting from the plurality of regions a certain region of which the calculated ratios are within a predetermined range;
calculating average values $IR_{AV,IN}$, $IG_{AV,IN}$ and $IB_{AV,IN}$ of the red integrated value $IR_{IN}$, the green integrated value $IG_{IN}$ and the blue integrated value $IB_{IN}$ with respect to the selected region; and
obtaining the first control signals $Rg_1$ and $Bg_1$ from the following equation when there is at least one selected region:

$$Rg_1 = 1/(IR_{AV,IN} / IG_{AV,IN})$$

$$Bg_1 = 1/(IB_{AV,IN} / IG_{AV,IN}),$$

and setting the first control signals to previous first control signals when there is no selected region.

19. The method of claim 18, wherein the predetermined range comprises a blackbody radiation curve formed by values obtained when a white object is captured under various colour temperatures on a two-dimensional plane, the two-dimensional plane having one axis of a ratio $IR_{IN}/IG_{IN}$ of the green integrated value $IG_{IN}$ and the red integrated value $IR_{IN}$ and the other axis of a ratio $IB_{IN}/IG_{IN}$ of the green integrated value $IG_{IN}$ and the blue integrated value $IB_{IN}$.

20. The method of claim 11, wherein the first control signals comprise $Rg_1$ and $Bg_1$, the correction values comprise $\Delta R$ and $\Delta B$ and the second control signals comprise $Rg_2$ and $Bg_2$.

21. An apparatus for generating control signals which regulate gain levels of a plurality of colour signals to maintain white balance of an object by receiving image data comprising the plurality of colour signals from the object and regulating the gain levels of the plurality of colour signals, the apparatus comprising:

means for generating first control signals to regulate the gain levels of the plurality of colour signals based on a plurality of colour signals of which gain levels are not regulated;
means for calculating correction values to correct the first control signals based on a plurality of colour signals of which gain levels are regulated; and
means for generating second control signals which are results of correcting the first control signals by the correction values.

22. The apparatus of claim 21, wherein the means for generating the second control signals obtains the second control signals by subtracting the correction values from the first control signals

23. The apparatus of claim 21, wherein the means for calculating the correction values calculates correction values so that the plurality of colour signals of which the gain levels are regulated, are placed on a blackbody radiation curve CBL formed by values obtained when a white object is captured under various colour temperatures on a two-dimensional plane, the two-dimensional plane having one axis of a ratio $IR_{OUT}/IG_{OUT}$ of a green integrated value

$IG_{OUT}$ and a red integrated value $IR_{OUT}$ and the other axis of a ratio $IB_{OUT}/IG_{OUT}$ of the green integrated value $IG_{OUT}$ and a blue integrated value $IB_{OUT}$.

24. The apparatus of claim 22, wherein the means for calculating the correction values calculates the correction values so that the plurality of colour signals of which the gain levels are regulated are placed on a blackbody radiation curve CBL formed by values obtained when a white object is captured under various colour temperatures on a two-dimensional plane, the two-dimensional plane having one axis of a colour difference signal $R-Y_{OUT}$ and the other axis of a colour difference signal $B-Y_{OUT}$.

25. The apparatus of claim 21, wherein the means for calculating the correction values calculates the correction values in reference to a lookup table having correction values determined experimentally according to the plurality of colour signals of which the gain levels are regulated.

26. The apparatus of claim 25, wherein the correction values of the lookup table are determined experimentally according to values of red, green and blue.

27. The apparatus of claim 25, wherein the correction values of the lookup table are determined experimentally according to values of a red colour difference signal R-Y, a blue colour difference signal B-Y and a luminance signal Y.

28. The apparatus of claim 21, wherein the first control signals comprise $Rg_1$ and $Bg_1$, the correction values comprise $\Delta R$ and $\Delta B$ and the second control signals comprise $Rg_2$ and $Bg_2$.

# FIG. 1

# FIG. 2A

# FIG. 2B

EP 1 617 682 A2

# FIG. 3

```
                        ┌─────────┐
                        │  START  │
                        └────┬────┘
          ┌──────────────────┼──────────────────┐
          ▼                                      ▼
┌──────────────────────┐            ┌──────────────────────┐
│ RECEIVE COLOR DATA OF│            │ RECEIVE COLOR DATA OF │
│ WHICH GAINS ARE NOT  │ S301       │ WHICH GAINS ARE       │ S305
│ REGULATED YET        │            │ REGULATED             │
└──────────┬───────────┘            └──────────┬───────────┘
           ▼                                    ▼
┌──────────────────────┐            ┌──────────────────────┐
│ GENERATE FIRST       │ S303       │ CALCULATE CORRECTION  │ S307
│ CONTROL SIGNALS      │            │ VALUES                │
└──────────┬───────────┘            └──────────┬───────────┘
           └──────────────────┬────────────────┘
                              ▼
              ┌──────────────────────────────┐
              │ CALCULATED CONTROL SIGNALS    │ S309
              │ WHICH REGULATE GAIN LEVELS OF │
              │ COLOR SIGNALS                 │
              └──────────────┬───────────────┘
                             ▼
                        ┌─────────┐
                        │   END   │
                        └─────────┘
```

# FIG. 4

START

S401 — RECEIVE COLOR DATA OF WHICH GAIN LEVELS ARE NOT REGULATED

S403 — CALCULATE $IR_{IN}$, $IG_{IN}$ AND $IB_{IN}$

S405 — CALCULATE $IR_{IN}/IG_{IN}$ AND $IB_{IN}/IG_{IN}$

S413 — SET PREDETERMINED RANGE

S407 — ARE $IR_{IN}/IG_{IN}$ AND $IB_{IN}/IG_{IN}$ WITHIN PREDETERMINED RANGE?

REFER

S409 — Y — CALCULATE FIRST CONTROL SIGNALS BASED ON EQUATION 2

S411 — N — DETERMINE FIRST CONTROL SIGNALS AS PREVIOUS VALUES

# FIG. 5

START

S501 — RECEIVE COLOR DATA OF WHICH GAIN LEVELS ARE NOT REGULATED

S503 — DIVIDE COLOR DATA INTO PLURALITY OF REGIONS

S505 — CALCULATE $IR_{IN}$, $IG_{IN}$ AND $IB_{IN}$ IN PLURALITY OF REGIONS

S507 — CALCULATE $IR_{MAX, IN}$, $IG_{MAX, IN}$ AND $IB_{MAX, IN}$

S509 — CALCULATE $IR_{MAX, IN} / IG_{MAX, IN}$ AND $IB_{MAX, IN} / IG_{MAX, IN}$

S517 — SET PREDETERMINED RANGE

S511 — ARE $IR_{MAX, IN}/IG_{MAX, IN}$ AND $IB_{MAX, IN}/IG_{MAX, IN}$ WITHIN PREDETERMINED RANGE?

REFER

Y

N

S513 — CALCULATE FIRST CONTROL SIGNALS BASED ON EQUATION 3

S515 — DETERMINE FIRST CONTROL SIGNALS AS PREVIOUS VALUES

EP 1 617 682 A2

# FIG. 6

START

S601 — RECEIVE COLOR DATA OF WHICH GAIN LEVELS ARE NOT REGULATED

S603 — DIVIDE COLOR DATA INTO PLURALITY OF REGIONS

S605 — CALCULATE $IR_{IN}$, $IG_{IN}$ AND $IB_{IN}$ IN PLURALITY OF REGIONS

S607 — CALCULATE $IR_{IN}/IG_{IN}$ AND $IB_{IN}/IG_{IN}$

S619 — SET PREDETERMINED RANGE

S609 — IS THERE A REGION HAVING $IR_{IN}/IG_{IN}$ AND $IB_{IN}/IG_{IN}$ WITHIN PREDETERMINED RANGE AMONG PLURALITY OF REGIONS?

REFER

Y

N

CALCULATE $IR_{AV,IN}$, $IG_{AV,IN}$ AND $IB_{AV,IN}$ — S611

CALCULATE $IR_{AV,IN}/IG_{AV,IN}$ AND $IB_{AV,IN}/IG_{AV,IN}$ — S613

CALCULATE FIRST CONTROL SIGNALS BASED ON EQUATION 5 — S615

S617 — DETERMINE FIRST CONTROL SIGNALS AS PREVIOUS VALUES

17

EP 1 617 682 A2

# FIG. 7

```
        ┌─────────┐
        │  START  │
        └─────────┘
             │
             ▼
S701  ┌──────────────────────────────┐
      │ RECEIVE COLOR DATA OF WHICH GAIN │
      │   LEVELS ARE REGULATED        │
      └──────────────────────────────┘
             │
             ▼
S703  ┌──────────────────────────────┐
      │ CALCULATE INTEGRATED VALUE OF │
      │         COLOR DATA            │
      └──────────────────────────────┘
             │
             ▼
S705  ┌──────────────────────────────┐
      │   CALCULATE CORRECTION VALUES │
      └──────────────────────────────┘
```